## Europäisches Patentamt

## European Patent Office

## Office européen des brevets

(11) Publication number: **0 108 971**
**B1**

(12) **EUROPEAN PATENT SPECIFICATION**

(45) Date of publication of patent specification: **25.05.88**

(51) Int. Cl.⁴: **C 09 K 3/14,** G 11 B 5/708

(21) Application number: **83110717.2**

(22) Date of filing: **26.10.83**

(54) **Abrasive; production thereof and use thereof in magnetic recording medium.**

(30) Priority: **01.11.82 JP 192904/82**
**02.11.82 JP 192838/82**
**02.11.82 JP 192843/82**
**07.06.83 JP 192904/82**
**12.07.83 JP 192904/82**
**07.06.83 JP 192838/82**
**12.07.83 JP 192838/82**

(43) Date of publication of application:
**23.05.84 Bulletin 84/21**

(45) Publication of the grant of the patent:
**25.05.88 Bulletin 88/21**

(84) Designated Contracting States:
**DE FR NL**

(56) References cited:
**FR-A-2 256 493**
**US-A-3 833 412**
**US-A-4 197 347**
**US-A-4 337 288**
**US-A-4 405 481**

(73) Proprietor: **SUMITOMO CHEMICAL COMPANY, LIMITED**
**15 Kitahama 5-chome Higashi-ku**
**Osaka-shi Osaka 541 (JP)**

(72) Inventor: **Kadokura, Hidekimi**
**5-2 Hoshigoecho**
**Niihama-shi (JP)**
Inventor: **Umezaki, Hiroshi**
**10-27 Kitauchicho-4-chome**
**Niihama-shi (JP)**
Inventor: **Murakami, Hideaki**
**4-20 Hongo-1-chome**
**Niihama-shi (JP)**
Inventor: **Hashimoto, Tadanori**
**12-2 Tennocho**
**Takatsuki-shi (JP)**
Inventor: **Nakano, Kazuhiko**
**1-34 Koozu-3-chome**
**Katano-shi (JP)**
Inventor: **Matsuda, Norio**
**29-7 Oike-2-chome**
**Ibaraki-shi (JP)**

(74) Representative: **Henkel, Feiler, Hänzel & Partner**
**Möhlstrasse 37**
**D-8000 München 80 (DE)**

## Description

This invention relates to an abrasive incorporated in magnetic recording media such as magnetic tape, magnetic disc, and the like, and to a magnetic recording medium comprising an abrasive (note: said abrasive is somtimes called a reinforcing agent, because it acts as an abrasive upon a magnetic head, while it serves as reinforcing agent for a magnetic tape or the like). More particularly, this invention relates to an abrasive for use in a magnetic recording medium such as magnetic tape, magnetic sheet, magnetic disc or the like to give excellent wear resistance to the magnetic recording medium without losing surface smoothness of the magnetic layer thereof and to give moderate abrasion to a magnetic head to renew the head so well, and relates also to a magnetic recording medium comprising such an abrasive.

A magnetic recording medium such as magnetic tape, magnetic sheet, or magnetic disc used in audio or video equipments or in computers comes in sliding contact at a high relative speed with a magnetic head at the time of recording and reproducing and, as a result, tends to become worn away. Conventional magnetic layers are unsatisfactory in this respect and, hence, a magnetic layer less susceptible to abrasion and of improved durability is demanded. Particularly in the case of a magnetic video recording medium, it is required to improve the so-called still picture reproducing characteristics (still characteristics), wherein recorded signals are reproduced by repeatedly scanning the same part of a magnetic coating with a revolving magnetic head.

To improve the above disadvantages, it has heretofore been proposed to incorporate as a reinforcing agent a nonmagnetic powder material such as chromia ($Cr_2O_3$), alumina ($Al_2O_3$), or silicon carbide (SiC) into the magnetic layer. It is not easy, however, to disperse uniformly the above reinforcing agents in the magnetic layer, and there occurs frequently non-uniformity of the dispersion, resulting in a decrease in wear resistance of the magnetic layer, an excessive wearing of the magnetic head, or a decrease in smoothness of the tape surface. To overcome such disadvantages, there is known a method in which the coating composition to be used in forming the magnetic layer is admixed with a dispersing agent such as n-butyl stearate, liquid paraffin, or sodium alkylbenzenesulfonate in its manufacturing stage and thoroughly mixed in wet state to improve the dispersibility of reinforcing agents. This method, however, is not effective for improving sufficiently the dispersibility.

The present inventors carried out an extensive study to overcome the above difficulties and, as a result, have found that it became possible to improve the dispersibility more effectively, as compared with the known methods, by imparting the dispersibility to a reinforcing agent by a specific method and that by using such a reinforcing agent it became possible to improve the wear resistance of both the magentic layer and the magnetic head and to improve also the smoothness of the tape surface. This invention has been accomplished based on the above finding.

One object of this invention is to provide an abrasive for magnetic recording medium and exhibiting an excellent dispersibility in the production of a magnetic recording medium.

Another object of this invention is to provide an abrasive having an oleophilic surface for magnetic recording medium to achieve the above object and to provide a process for producing such an abrasive.

A further object of this invention is to provide a magnetic recording medium comprising a support and a magnetic layer coated thereon containing an excellently dispersible abrasive therein.

Still further objects and advantages of this invention will become apparent to those skilled in the art from the following description.

This invention provides a process for producing an abrasive having an oleophilic surface for use in magnetic recording media, which comprises subjecting an inorganic powder material having an average particle size of 2 μm across or below and a Mohs hardness of 5 or above either to (I) a set contact treatment by stirring said powder material in an aqueous solution or an organic solvent solution of a dispersing agent having an oleophilic group, followed by drying or to (II) a dry contact treatment with a dispersing agent having an oleophilic group under grinding conditions giving an impact value of 1G or more, and the abrasive thus produced.

Further, this invention also provides a magnetic recording medium comprising a support and a magnetic recording layer coated thereon, characterized in that said magnetic recording layer contains a magnetic powder and an abrasive having an oleophilic surface produced by the above-mentioned process.

US—A—4 337 288, US—A—4 197 347, US—A—3 833 412 and FR—A—2 256 493 in general merely disclose the manufacture of magnetic recording materials by blending the various ingredients in a solvent. None of the references, however, includes enabling disclosure why and how to make the surface of an abrasive for use in magnetic recording media oleophilic.

The inorganic powder materials used in this invention are those having a Mohs hardness of 5 or above and, more particularly, are selected from metal oxides and double oxides such as γ-alumina, α-alumina, silica, iron oxide, chromium oxide, titanium oxide, zirconium oxide, cerium oxide, tin oxide (stannous or stannic oxide), silicon carbide, spinel, zinc aluminate, and aluminosilicate. Suitable shapes of the powder materials are granular preferably spherical, with a particle size of 2 μm across or below, preferably 0.1 to 1 μm, in average (median particle size), and of a narrow particle size distibution. When an inorganic powder material having an average particle size larger than 2 μm is used, there arise many problems in that the abrasive action on the magnetic head becomes so large that the head tends to be worn down and even gets scratches, there takes place drop-out at the time of recording and reproducing. When the average particle size is too small, the powder material does not meet the primary requirement of improving the wear resistance of the magnetic recording medium. An inorganic powder material having a Mohs hardness below 5 is not desirable, because both the reinforcing effect upon a magnetic recording medium and the improvement in wear resistance are no longer expectable. Of the above-listed inorganic powder materials, especially preferred are γ-alumina, α-alumina, chromium oxide, and titanium oxide.

Dispersing agents having oleophilic groups usable in this invention are higher fatty acids having 10 to 18 carbon atoms (hereinafter the number of carbon atoms is refered to as "$C_{10-18}$") such as decanoic acid, dodecanoic acid, tetradecanoic acid, hexadecanoic acid, octadecanoic acid, and oleic acid, and salts thereof (the term "salt" as used herein means ammonium, sodium, potassium, magnesium, calcium, or aluminum salt and the term "salt" is used hereinafter in the same meaning); salts of sulfuric acid esters of higher ($C_{10-18}$) alcohols such as decyl sulfate salts, dodecyl sulfate salts, tetradecyl sulfate salts, hexadecyl sulfate salts, and octadecyl sulfate salts; salts of ($C_{10-18}$) alkyl-($C_6$ or $C_{10}$)arylsulfonic acids such as decylbenzene-sulfonic acid salts, dodecylbenzenesulfonic acid salts, tetradecylbenzenesulfonic acid salts, hexadecyl-benzenesulfonic acid salts, and octadecylbenzenesulfonic acid salts; salts of di($C_{4-12}$)alkyl sulfosuccinic acid such as di-(2-ethylhexyl) sulfosuccinate salts; polyoxyethylene (attaching 7—13 moles of ethylene oxide, hereinafter referred to as "7—13 moles" for brevity) ($C_{10-18}$)alkyl ether sulfate salts such as polyoxyethylene decyl ether sulfate salts, polyoxyethylene dodecyl ether sulfate salts, polyoxyethylene tetradecyl ether sulfate salts, polyoxyethylene hexadecyl ether sulfate salts, and polyoxyethylene octadecyl ether sulfate salts; poly(7—13 moles)oxyethylene higher($C_{10-18}$)alcohol ether such as polyoxyethylene decyl ethers, polyoxyethylene dodecyl ethers, polyoxyethylene tetradecyl ethers, polyoxyethylene hexadecyl ethers, polyoxyethylene octadecyl ethers, and polyoxyethylene oleyl ethers; poly(7—13 moles)oxyethylene($C_{8-18}$)alkylphenol ethers such as polyoxyethylene octylphenol ethers, polyoxyethylene nonylphenol ethers, polyoxyethylene decylphenol ethers, polyoxyethylene dodecylphenol ethers, polyoxyethylene tetradecylphenol ethers, polyoxyethylene hexadecylphenol ethers, and polyoxyethylene octa-decylphenol ethers; sorbitan esters of higher($C_{10-18}$)fatty acids such as sorbitan decanoate, sorbitan dodecanoate, sorbitan tetradecanoate, sorbitan hexadecanoate, sorbitan octadecanoate, and sorbitan oleate; poly(7—13 moles)oxyethylene sorbitan higher($C_{10-18}$)fatty acid esters such as polyoxyethylene sorbitan decanoate, polyoxyethylene sorbitan dodecanoate, polyoxyethylene sorbitan tetradecanoate, polyoxyethylene sorbitan hexadecanoate, polyoxyethylene sorbitan octadecanoate, and polyoxyethylene sorbitan oleate; poly(7—13 moles)oxyethylene higher($C_{10-18}$) fatty acid esters such as polyoxyethylene decanoate, polyoxyethylene dodecanoate, polyoxyethylene tetradecanoate, polyoxyethylene hexadecanoate, polyoxyethylene octadecanoate, and polyoxyethylene oleate; higher($C_{10-18}$)fatty acid glycerol esters such as glycerol dodecanoate, glycerol octadecanoate, and glycerol oleate; higher($C_{10-18}$)alkylamine acetates such as decylamine acetate, dodecylamine acetate, tetradecylamine acetate, hexadecylamine acetate, and octadecylamine acetate; quaternary($C_{1-18}$)alkylammonium salts such as decyltrimethyl-ammonium chloride, dodecyltrimethylammonium chloride, tetradecyltrimethylammonium chloride, hexadecyltrimethylammonium chloride, octadecyltrimethylammonium chloride, didodecyldimethylammonium chloride, and dioctadecyldimethylammonium chloride; poly(7—13 moles)oxyethylene($C_{10-18}$)alkylamines such as polyoxyethylene decylamine, polyoxyethylene dodecylamine, polyoxyethylene tetradecylamine, polyoxyethylene hexadecylamine, and polyoxyethylene octadecylamine; phospholipids such as lecithin; organosilicon compounds known as silane coupling agents such as vintyltrichlorosilane, vinyltriethoxysilane, vinyltris(β-methoxyethoxy)silane, γ-glycidoxypropyltrimethoxysilane, γ-methacryloxypropyltri-methoxysilane, N-β-(aminoethyl)-γ-aminopropyltrimethoxysilane, N-β-(aminoethyl)-γ-aminopropyl-methyldimethoxysilane, γ-chloropropyltrimethoxysilane, γ-mercaptopropyltrimethoxysilane, γ-amino-propyltrimethoxysilane, γ-aminopropyltriethoxysilane, β-(3,4-epoxycyclohexyl)ethyltrimethoxysilane, γ-glycidoxypropyl trimethoxysilane, and γ-mercaptopropyltrimethoxysilane; and organotitanium com-pounds known as titanium coupling agents such as isopropyltriisostearoyl titanate, isopropyltridodecyl-benzenesulfonyl titanate, isopropyltris(dioctyl pyrophosphate) titanate, tetraisopropylbis(dioctyl phosphite) titanate, tetraoctylbis(ditridecyl phosphate) titanate, tetra(2,2-diallyloxymethyl-1-butyl)bis(ditridecyl)phosphite titanate, bis(dioctyl pyrophosphate)oxyacetate titanate, and tris(dioctyl pyrophosphate)-ethylene titanate. These compounds can be used alone or as a mixture thereof.

According to this invention, it can be performed to make an inorganic powder oleophilic on its surface either by (I) a wet contact treatment in which the inorganic powder material is stirred in an aqueous solution or a solution of organic solvent(s) containing a dispersing agent having an oleophilic group, followed by drying or by (II) a dry contact treatment with a dispersing agent having an oleophilic group under grinding conditions giving an impact value of 1G or more.

In the case of the wet contact treatment (I), the following procedures are employed. Before making the powder material oleophilic, the agglomerated particles are converted to primary particles by either of the following known methods: (1) a method utilizing the surface charge of inorganic powder material (hereinafter referred to as the charging method; the dispersing agent is used in the form of an aqueous solution), and (2) a solvent method in which an organic solvent is used. The choice of the method more suitable for the dispersion may be made according to the type and conditions of the inorganic powder

3

material to be treated. The procedure of disagglomeration into primary particles and the succeeding treatment for making oleophilic are described below in detail.

The charging method can be carried out either by taking advantage of the isoelectric point of the inorganic powder material or by utilizing the preferential adsorption of an ion to the inorganic powder material. In the former case, secondary particles are disagglomerated to primary particles to promote the dispersion by the repulsion between the charged particles, because the surface charge of an inorganic powder material in water varies with pH, generally being positively charged in acid side where pH is smaller than the isoelectric point, while being negatively charged in alkaline side where pH is larger than the isoelectric point; in the latter case, preferential adsorption of a specific ion to the solid surface is taken to advantage.

For instance, titanium dioxide ($TiO_2$) or $\alpha$-ferric oxide ($\alpha$-$Fe_2O_3$) disperses easily in an aqueous aluminum chloride solution, because pH (about 3) of the aqueous aluminum chloride solution is smaller (i.e. in the acid side) than the isoelectric point (4.7) of $TiO_2$ or that (5.2) of $\alpha$-$Fe_2O_3$ and, hence, particles of $TiO_2$ or $\alpha$-$Fe_2O_3$ particles aquire a positive charge. Another reason seems to be selective adsorption of $A^{+++}$ on the surface of $TiO_2$ or $\alpha$-$Fe_2O_3$ particles. To the resulting slurry, is added an anionic surface active agent, preferably one capable of forming an insoluble salt with the $Al^{+++}$ ion on the surface of dispersed particles, for example, sodium alkylbenzenesulfonate, sodium dodecanoate, or the like. The surface active agent is adsorbed in oriented arrangement to the surface to make the inorganic powder material oleophilic on the surface.

In the case of treating the inorganic powder material by the solvent method, the powder material is dispersed in a solvent having a suitable solubility parameter for the powder material, then a soluble fatty acid or the like is added to dissolve in the solvent, and a nonsolvent is added to deposit the fatty acid or the like, whereby the surface of the powder material adsorbs the fatty acid or the like and becomes oleophilic. As an example, $TiO_2$ is made oleophilic by dispersing it in isopropyl alcohol (IPA), then adding a higher fatty acid such as dodecanoic acid to the suspension to form a solution in the solvent, and adding water to precipitate the higher fatty acid to adsorb on the surface of $TiO_2$ particles.

Alternatively, surfaces of the inorganic powder materials can be made oleophilic by (II) the dry contact treatment by subjecting a mixture of an inorganic powder and a dispersing agent having an oleophilic group under grinding conditions giving an impact value of 1G or more, preferably 3 to 15G. More concretely, the dry contact treatment can be practiced by using, for example, a ball mill, a vibration mill, etc. The use of a vibration mill with an impact value of 3 to 15G is particularly preferable. The milling time is usually 1 minute to 10 hours.

The dispersing agent having an oleophilic group can be used in an amount of 0.01 to 20 parts by weight, preferably 0.02 to 10 parts by weight, more preferably 0.5 to 2 parts by weight per 100 parts by weight of the inorganic powder material. When the amount of the dispersing agent is less than 0.01 part by weight, the effect for improving the dispersibility becomes slight. On the other hand, when the amount is over 20 parts by weight, the effect of improving the dispersibility does not increase any more, and further it is not advantageous from the economical viewpoint to use such a large amount of dispersing agent and at the same time undesirably shows a tendency to bring about a blooming phenomenon due to an excess amount of the dispersing agent in the magnetic recording medium.

Advantages of the abrasives of the present invention for use in magnetic recording media are sufficiently realized when the inorganic powder material having an oleophilic surface is added in an amount of 0.1 to 15, preferably 0.5 to 10, parts by weight per 100 parts by weight of the magnetic powder material. When the amount is below 0.1 part by weight, the wear resistance of the magnetic layer in magnetic recording media becomes inferior, while when it exceeds 15 parts by weight, the abrasion of the magnetic head undesirably increases.

The magnetic material used in this invention may be selected arbitrarily from conventional magnetic materials such as $\gamma$-$Fe_2O_3$, triiron tetraoxide ($Fe_3O_4$), cobalt-containing $\gamma$-$Fe_2O_3$, reduced iron powder, and chromium (IV) oxide ($CrO_2$). The particle size generally used is in the range of from 0.1 to 5 $\mu$m, though not limitative.

As binders, there can be used thermoplastic resins, thermosetting resins, or mixtures thereof. Examples of the binder used in this invention are epoxy resins, polyurethane resins, urea resins, polyamide resins, silicone resins, polyester resins, phenol resins, urea-formaldehyde resins, vinyl resins, cellulose derivatives, homopolymers and copolymers of acrylic acid or methacrylic acid, and alkyd resins. These resins can be used alone or in combination thereof.

Advantages of the inorganic powder material having oleophilic surface according to this invention, when used as an abrasive in magnetic recording media, are described below with reference to Examples, in which all parts are by weight.

Example 1

100 Grams of $\alpha$-alumina powder having a mean primary particle size of 0.6 $\mu$m across and 1 g of sodium dodecanoate were charged into a vibration mill having an inner volume of 3 liters, pulverized (impact value=6G) and homogenized for 20 minutes.

0.2 Gram of the alumina powder thus obtained and 10 ml of a medium (methyl ethyl ketone) were charged into a test tube and shaken for 5 minutes. After the mixture was subjected to an ultrasonic dispersing treatment, it was allowed to stand (the height of the mixture in the test tube being 10 cm). After standing for 24 hours, the height of sedimentation (obtained by subtracting the height of supernatant layer) was measured.

A greater height of sedimentation means a more excellent dispersibility.

Further, for comparison, the height of sedimentation was measured by repeating the above-mentioned procedure, except that no dispersant (dispersing agent) was used.

The results are summarized in Table 1.

TABLE 1

|  | Height of sedimentation (cm) |
| --- | --- |
| Product of this invention | 9.6 |
| Comparative product | 0.5* |

Note)
*The height of sedimentation was 2 cm after standing for 2 hours.

Example 2

80 Grams of an α-alumina powder having a mean primary particle size of 0.6 μm across, 20 g of a γ-alumina fine powder having a mean primary particle size of 0.01 μm across and 3 g of aluminum dodecanoate were charged into a vibration mill having an inner volume of 3 liters, pulverized (impact value=6G) and homogenized for 20 minutes.

Dispersibility of the alumina powder thus obtained was measured in the same manner as in Example 1. As a result, the height of sedimentation was 9.7 cm.

For comparison, the dispersibility was measured after repeating the above-mentioned procedure, except that no dispersant was used. As a result, the height of sedimentation was found to be 0.5 cm (the height of sedimentation was 3 cm after standing for 2 hours).

Example 3

100 Grams of α-alumina powder having a mean primary particle size of 0.6 μm across was charged into a vibration mill having an inner volume of 3 liters together with a dispersant of which kind and quantity were as shown in Table 2, and the mixture was pulverized (impact value=6G) and homogenized for 20 minutes.

Dispersibilities of the alumina powders thus obtained were as shown in Table 2.

5

TABLE 2

| No. | Dispersant | Amount of dispersant (g) | Height of sedimentation (cm) |
|---|---|---|---|
| 1 | Sodium octadecanoate | 1 | 9.4 |
| 2 | Aluminum dodecanoate | 1 | 9.4 |
| 3 | Aluminum octadecanoate | 1 | 9.2 |
| 4 | Sodium dodecyl sulfate | 1 | 9.3 |
| 5 | Sodium dodecylbenzenesulfonate | 1 | 9.6 |
| 6 | Sodium octadecylbenzenesulfonate | 1 | 9.5 |
| 7 | Di-2-ethylhexyl sodium sulfosuccinate | 1 | 9.6 |
| 8 | Sodium polyoxyethylene dodecyl ether sulfate | 1 | 9.3 |
| 9 | Polyoxyethylene dodecyl ether | 1 | 9.2 |
| 10 | Sorbitan monododecanoate | 1 | 9.2 |
| 11 | Dodecylamine acetate | 1 | 9.1 |
| 12 | Soybean lecithin | 1 | 9.6 |
| 13 | Sodium dodecanoate | 0.1 | 9.4 |
| 14 | Sodium dodecanoate | 10 | 9.5 |
| 15 | γ-Aminopropyltrimethoxysilane | 1 | 9.6 |
| 16 | β-(3,4-Epoxycyclohexyl)-ethyltrimethoxysilane | 1 | 9.6 |
| 17 | Dodecanoic acid | 1 | 9.5 |

Example 4

100 Grams of a silica powder having a mean primary particle size of 1 μm across and 1 g of sodium dodecanoate were charged into a ball mill having an inner volume of 3 liters, pulverized (impact value=6G) and homogenized for 4 hours.

Dispersibility of the silica powder thus obtained was 8.9 cm, as expressed by the height of sedimentation.

For comparison, the same treatment as above was repeated except that the sodium dodecanoate was not used. As a result, the height of sedimentation was found to be 0.5 cm.

Example 5

100 Grams of a chromium oxide ($Cr_2O_3$) powder having a mean primary particle size of 0.4 μm across and 1 g of sodium dodecanoate were charged into a vibration mill having an inner volume of 3 liters, pulverized (impact value=6G) and homogenized for 20 minutes. Dispersibility of the chromium oxide powder thus obtained was 9.6 cm, as expressed by the height of sedimentation.

For comparison, the above-mentioned treatment was repeated, except that the sodium dodecanoate was not used. As a result, the height of sedimentation was found to be 1 cm.

Example 6

100 Grams of an α-alumina powder having a mean primary particle size of 0.6 μm across and 1 g of sodium dodecanoate as a dispersant were charged into a vibration mill having an inner volume of 3 liters, pulverized (impact value=6G) and homogenized for 20 minutes.

0.2 Gram of the readily dispersible alumina powder thus obtained and 10 ml of medium (methyl ethyl ketone) were charged into a test tube and shaken for 5 minutes.

After the mixture was subjected to an ultrasonic dispersing treatment, it was allowed to stand. After

6

**0 108 971**

standing for 24 hours, the height of sedimentation was measured. As a result, the height of sedimentation was found to be 9.6 cm.

Using the alumina prepared in the above-mentioned manner, a magnetic coating composition having the following compounding ratio (by weight) was prepared:

| | |
|---|---|
| Ferromagnetic iron oxide | 100 parts |
| Alumina (mentioned above) | 5 „ |
| Vinylite VYHH (trade name; manufactured by Union Carbide Corp., U.S.A.) | 15 „ |
| Polyurethane prepolymer | 5 „ |
| Carbon black | 5 „ |
| n-Butyl stearate | 1 „ |
| Liquid paraffin | 0.2 „ |
| Methyl ethyl ketone | 100 „ |
| Toluene | 100 „ |

After homogenization for 20 hours by means of a ball mill, the magnetic coating composition was coated on a polyester base film having a thickness of 20 μm so as to give a thickness in dryness of 6 μm, and then dried. Subsequently, it was cut into a desired width.

Comparative Example 1

A magnetic tape was prepared by repeating the procedure of Example 6, except that the alumina used in the magnetic coating composition of Example 6 was replaced by an α-alumina powder which had not been pulverized together with a dispersant.

Example 7

100 Grams of a chromium oxide ($Cr_2O_3$) powder having a mean primary particle size of 0.4 μm and 1 g of sodium dodecanoate as a dispersant were charged into a vibration mill having an inner volume of 3 liters, pulverized (impact value=6G) and homogenized for 20 minutes.

Dispersibility of the readily dispersible chromium oxide thus obtained was measured under the same conditions as in Example 6. As a result, the height of sedimentation was found to be 9.6 cm.

Using the chromium oxide prepared in the above-mentioned manner, a magnetic coating composition having the following compounding ratio (by weight) was prepared:

| | |
|---|---|
| Ferromagnetic iron oxide | 100 parts |
| Chromium oxide (mentioned above) | 7 „ |
| Vinyl VYHH (trade name; manufactured by Union Carbide Corp., U.S.A.) | 15 „ |
| Polyurethane prepolymer | 5 „ |
| Carbon black | 5 „ |
| n-Butyl stearate | 1 „ |
| Liquid paraffin | 0.2 „ |
| Methyl ethyl ketone | 100 „ |
| Toluene | 100 „ |

After homogenization for 20 hours by means of a ball mill, the above-mentioned magnetic coating composition was coated on a polyester base film having a thickness of 20 μm so as to give a thickness in dryness of 6 μm, and then dried. Subsequently, it was cut into a desired width.

Comparative Example 2

A magnetic tape was prepared by repeating the procedure of Example 7, except that the chromium oxide used in the composition of Example 7 was replaced by a chromium oxide powder which had not been pulverized together with a dispersant.

Example 8

A magnetic coating composition was prepared according to the recipe of Example 7, except that the chromium oxide of Example 7 was replaced by 100 g of a titanium oxide ($TiO_2$) powder having a mean primary particle size of 0.5 μm across. Using the magnetic coating composition thus obtained, a magnetic tape was prepared.

Comparative Example 3

A magnetic coating composition was prepared according to the recipe of Example 7, except that the chromium oxide of Comparative Example 2 was replaced by a titanium oxide powder which had not been

7

pulverized together with a dispersant. Using the magnetic coating composition thus obtained, a magnetic tape was prepared.

The magnetic tapes prepared above were run for 100 hours in the state of reproduction to measure wear at magnetic heads. Further, by means of a surface roughness meter, the surfaces of the tapes were examined to evaluate the mean roughness at the center line.

TABLE 3

| | Wear at head (µm/100 hrs.) | Mean roughness at center line (µm) |
|---|---|---|
| Example 6 | 1 | 0.02 |
| Comparative Example 1 | 5 | 0.08 |
| Example 7 | 2 | 0.03 |
| Comparative Example 2 | 7 | 0.10 |
| Example 8 | 2 | 0.02 |
| Comparative Example 3 | 3 | 0.08 |

Example 9

To 200 parts of an aqueous solution containing $2.5 \times 10^{-3}$ mole/liter of aluminum nitrate $[Al(NO_3)_3]$, was added 100 parts of α-alumina (α-$Al_2O_3$; AKP-30 of Sumitomo Chemical Co.) of 0.4 µm in average (median) particle size. The mixture was uniformly dispersed by ultrasonic treatment for 30 minutes. To the dispersion, the temperature of which had been elevated at 50°C, was added 50 parts of an aqueous solution containing 1 part of sodium dodecanoate. The mixture was stirred at 50°C for one hour. The dispersed phase was collected by filtration and dried to obtain an abrasive for use in magnetic recording media.

Into a test tube, was charged 0.2 g of the above prepared α-$Al_2O_3$ powder together with 10 ml of solvent mixture (1:1:1 by weight) of methyl·ethyl ketone (MEK), methyl isobutyl ketone (MIBK), and toluene (the height of mixture being 10 cm). The mixture was shaken for 5 minutes, the subjected to ultrasonic dispersing treatment, then left standing still for 24 hours, and measured for the height of the sediment. The height was found to be 9 cm (the greater the height, the better is the dispersion). The results showed that the above prepared α-$Al_2O_3$ possessed surface oleophilic characteristics and excellent dispersibility in an organic solvent.

The abrasive for use in magnetic recording media obtained above was incorporated in a magnetic coating composition and a magnetic tape was prepared in the following manner.

Five parts of the above prepared α-$Al_2O_3$ was uniformly mixed with the magnetic coating composition given below. After addition of 2 parts of a polyisocyanate, the coating composition was coated on a strip of polyester film and subjected to surface glossing treatment and heat treatment to prepare a magnetic tape specimen No. 1. The specimen was tested for the degree of dispersion of α-$Al_2O_3$ in the magnetic coating layer, the still characteristics, and the abrasion of the magnetic head.

| | Parts |
|---|---|
| Co-containing γ-$Al_2O_3$, needle | 100 |
| Lecithin | 1 |
| Polyurethane | 7 |
| Nitrocellulose | 8 |
| Vinyl chloride-vinyl acetate copolymer | 8 |
| Carbon black | 5 |
| Silicone oil | 1 |
| MEK | 70 |
| MIBK | 70 |
| Toluene | 70 |

Example 10

Using α-$Al_2O_3$ (AKP-20 of Sumitomo Chemical Co.) of 0.5 µm in average particle size, magnetic tape specimen No. 2 was prepared in the same manner as described in Example 9. After the oleophilization treatment on the surface, the α-Al₂O₃ showed the sediment height of 8.8 cm in the solvent mixture of MEK, MIBK, and toluene after 24 hours.

Example 11

Using sodium di-2-ethylhexyl sulfosuccinate as a dispersing agent, magnetic tape specimen No. 3 was prepared in the same manner as described in Example 9. After oleophilization treatment, the α-Al₂O₃ showed the sediment height of 8.9 cm in the solvent mixture of MEK, MIBK, and toluene after 24 hours.

Example 12

Using sodium dodecylbenzene sulfonate as dispersing agent, magnetic tape specimen No. 4 was prepared in the same manner as described in Example 9. After oleophilization treatment, the α-Al₂O₃ showed the sediment height of 9.1 cm in the solvent mixture of MEK, MIBK, and toluene after 24 hours.

Example 13

To 200 parts of an IPA solution containing 1 part of oleic acid, was added 100 parts of TiO₂ (rutile type) of 0.5 μm in average particle size. The mixture was subjected to ultrasonic treatment for 30 minutes to form a uniform dispersion. After addition of 200 parts of water, the dispersion was stirred for one hour, then removed of the dispersing medium by filtration, and dried to obtain an abrasive for use in magnetic recording media. The thus treated TiO₂ showed the sediment height of 8.5 cm in the solvent mixture of MEK, MIBK, and toluene after 24 hours. In the same manner as described in Example 9, the TiO₂ thus treated was incorporated in the magnetic coating composition. Using the resulting coating composition, magnetic tape specimen No. 5 was prepared in the same manner as described in Example 9.

Comparative Example 4

α-Al₂O₃ of 0.5 μm in average particle size without having been treated with a dispersing agent having an oleophilic group was incorporated in the magnetic coating composition. Using the composition, magnetic tape specimen A was prepared in the same manner as described in Example 9. The α-Al₂O₃ without having been subjected to oleophilization treatment showed the sediment height of 0.5 cm in the solvent mixture of MEK, MIBK, and toluene after standing for 24 hours.

Comparative Example 5

TiO₂ (rutile type) of 0.5 μm in average particle size without having been treated with a dispersing agent having an oleophilic group was incorporated in the magnetic coating composition. Using the composition, magnetic tape specimen B was prepared in the same manner as described in Example 9. The TiO₂ (rutile type) without having been subjected to the oleophilization treatment showed the sediment height of 1.0 cm in the solvent mixture of MEK, MIBK, and toluene after standing for 24 hours.

The magnetic tape specimens No. 1 to No. 5 and Nos. A and B prepared in Examples 9 to 13 and Comparative Examples 4 and 5, respectively, were observed under a scanning electron microscope to confirm the state of dispersion of each inorganic powder material. The specimens were tested also for the surface roughness by means of a surface roughness meter to determine the average roughness along the center line. Further, each specimen was placed in a video tape recorder to determine the still characteristics. The abrasion of a magnetic head was determined by repeated running test for 100 hours to reproduce the recorded signals. The results obtained were as shown in Table 4.

TABLE 4

| Specimen No. | Still characteristics* (minute) | Abrasion of head (μm/100 hour) | Average roughness along center line (μm) | Presence of agglomerated particle |
|---|---|---|---|---|
| 1 | >300 | 3 | 0.02 | practically no |
| 2 | " | 4 | " | " |
| 3 | " | 3 | " | " |
| 4 | " | 3 | " | " |
| 5 | " | 2 | " | " |
| A (Comp. Ex. 4) | 200 | 3 | 0.08 | yes |
| B (Comp. Ex. 5) | 160 | 2 | 0.08 | yes |

Note:
*Each magnetic tape was run on a video tape recorder to reproduce a still picture and the time (still life) elapsed before the output signal had declined by 10 dB from the input level was determined.

It is clear from the above results that when incorporated in a magnetic coating composition, the inorganic powder material having an oleophilic surface prepared according to this invention serves as an abrasive to improve both the surface evenness and especially the wear resistance of magnetic recording media, thus contributing much to the improvement in the characteristics of magnetic recording tape. In above Examples magnetic video recording tapes comprising Co-containing needle $\gamma$-$Fe_2O_3$ as the magnetic powder material were described, but the invention is not limited thereto. The abrasives according to this invention are effective also in a magnetic tape containing a magnetic metal powder such as magnetic iron powder and in all of the magnetic tapes, discs, and cards containing various magnetic powder materials.

## Claims

1. A process for producing an abrasive having oleophilic surfaces for use in magnetic recording media, which comprises subjecting an inorganic powder material having an average particle size of 2 μm across or below and a Mohs hardness of 5 or above either to (I) a wet contact treatment or to (II) a dry contact treatment under grinding conditions giving an impact value of 1G or more, with a dispersing agent having an oleophilic group.

2. A process according to Claim 1, wherein the dispersing agent having an oleophilic group is used in an amount of 0.01 to 20 parts by weight per 100 parts by weight of the inorganic powder material.

3. A process according to Claim 1, wherein the dispersing agent having an oleophilic group is used in an amount of 0.02 to 10 parts by weight per 100 parts by weight of the inorganic powder material.

4. A process according to Claim 1, 2 or 3, wherein the wet contact treatment is conducted by stirring the inorganic powder material in an aqueous solution in an organic solvent solution of a dispersing agent having an oleophilic group, followed by drying.

5. A process according to Claim 1, 2 or 3, wherein the dry contact treatment is conducted under grinding conditions giving an impact value of 3 to 15G.

6. A process according to Claim 1, 2, 3, 4 or 5, wherein the inorganic powder material is a compound selected from the group consisting of metal oxides and metal double oxides including $\gamma$-alumina, $\alpha$-alumina, silica, iron oxide, chromium oxide, titanium oxide, zirconium oxide, cerium oxide, tin oxide, silicon carbide, spinel, zinc aluminate, and aluminosilicate.

7. A process according to Claim 1, 2, 3, 4, 5 or 6, wherein the dispersing agent having an oleophilic group is at least one member selected from the group consisting of higher fatty acids having 10 to 18 carbon atoms; ammonium, sodium, potassium, magnesium, calcium and aluminium salts of said higher fatty acids; ammonium sodium, potassium, magnesium, calcium and aluminum salts of sulfuric acid esters of higher alcohols having 10 to 18 carbon atoms; ammonium, sodium; potassium, magnesium, calcium and aluminum salts of alkylarylsulfonic acid esters, said alkyl group having 10 to 18 carbon atoms and said

**0 108 971**

aryl group having 6 or 10 carbon atoms; ammonium, sodium, potassium, magnesium, calcium, and aluminum salts of dialkylsulfosuccinic acids, said alkyl group having 4 to 12 carbon atoms; ammonium, sodium, potassium, magnesium, calcium, and aluminum salts of polyoxyethylene alkyl ether sulfates, said alkyl group having 10 to 18 carbon atoms and said polyoxyethylene group having 7 to 13 ethylene oxide units; polyoxyethylene higher alcohol ethers, said polyoxyethylene having 7 to 13 ethylene oxide units and said higher alcohol having 10 to 18 carbon atoms; polyoxyethylene alkylphenol ethers, said polyoxyethylene having 7 to 13 ethylene oxide units and said alkyl group having 8 to 18 carbon atoms; sorbitan higher fatty acid esters, said higher fatty acid having 10 to 18 carbon atoms; polyoxyethylene-sorbitan higher fatty acid esters, said polyoxyethylene having 7 to 13 ethylene oxide units and said higher fatty acid having 10 to 18 carbon atoms; polyoxyethylene higher fatty acid esters, said polyoxyethylene having 7 to 13 ethylene oxide units and said higher fatty acid having 10 to 18 carbon atoms; glycerol higher fatty acid esters, said higher fatty acid having 10 to 18 carbon atoms; higher alkylamine acetic acid salts, said alkyl group having 10 to 18 carbon atoms; quaternary ammonium salts having alkyl groups of 1 to 18 carbon atoms; polyoxyethylene alkylamines, said polyoxyethylene having 7 to 13 ethylene oxide units and said alkyl group having 10 to 18 carbon atoms; phosphoric acid esters of higher fatty acids having 10 to 18 carbon atoms; organic silane compounds; and organotitanium compounds.

8. An abrasive having an oleophilic surface for use in magnetic recording media, which is obtainable by subjecting an inorganic powder material having a Mohs hardness of 5 or above and an average particle size of 2 µm across or below to a wet contact treatment with an aqueous solution or an organic solvent solution of a dispersing agent having an oleophilic group, and drying the treated powder material.

9. An abrasive used in a magnetic recording medium having an oleophilic surface which is obtainable by subjecting an inorganic powder having a Mohs hardness of 5 or above and a mean particle size of 2 µm across or below to a dry contact treatment with a dispersing agent having an oleophilic surface under grinding conditions giving an impact value of 1G or greater.

10. A magnetic recording medium comprising a support and a magnetic recording layer coated thereon, characterized in that the magnetic recording layer comprises 0.1 to 15 parts per 100 parts of a magnetic powder material (weight by weight) of an abrasive having an oleophilic surface obtainable by subjecting an inorganic powder material having a Mohs hardness of 5 or above and an average particle size of 2 µm across or below to a wet contact treatment with an aqueous solution or an organic solvent solution of a dispersing agent having an oleophilic group and drying the treated powder material.

11. A magnetic recording medium comprising a support and a magnetic recording layer coated thereon, characterized in that the magnetic recording layer comprises 0.1 to 15 parts per 100 parts of a magnetic powder material (weight by weight) of an abrasive having an oleophilic surface obtainable by subjecting an inorganic powder material having a Mohs hardness of 5 or above and an average particle size of 2 µm across or below to a dry contact treatment with a dispersing agent having an oleophilic group under grinding conditions giving an impact value of 1G or greater.

**Patentansprüche**

1. Verfahren zur Herstellung eines Schleifmittels mit oleophilen Oberflächen zur Verwendung in magnetischen Aufzeichnungsmaterialien, dadurch gekennzeichnet, daß man zusammen mit einem Dispergiermittel mit einer oleophilen Gruppe ein anorganisches Pulvermaterial einer durchschnittlichen Teilchengröße von etwa 2 µm oder darunter und einer Mohs-Härte von 5 oder darüber entweder
    1. einer Naßkontaktbehandlung oder
    2. einer Trockenkontaktbehandlung unter Mahlbedingungen, die eine Schlagkraft von 1G oder
       mehr gewährleisten, unterwirft.

2. Verfahren nach Anspruch 1, dadurch gekennzeichnet, daß man das Dispergiermittel mit einer oleophilen Gruppe in einer Menge, bezogen auf 100 Gew.-Teile des anorganischen Pulvermaterials, von 0,01—20 Gew.-Teil(en) einsetzt.

3. Verfahren nach Anspruch 1, dadurch gekennzeichnet, daß man das Dispergiermittel mit einer oleophilen Gruppe in einer Menge, bezogen auf 100 Gew.-Teile des anorganischen Pulvermaterials, von 0,02—10 Gew.-Teil(en) einsetzt.

4. Verfahren nach Anspruch 1, 2 oder 3, dadurch gekennzeichnet, daß man die Naßkontaktbehandlung durchführt, indem man das anorganische Pulvermaterial in einer wäßrigen Lösung oder einer organischen Lösungsmittellösung eines Dispergiermittels mit einer oleophilen Gruppe verrührt und anschließend trocknet.

5. Verfahren nach Anspruch 1, 2 oder 3, dadurch gekennzeichnet, daß man die Trockenkontaktbehandlung unter Mahlbedingungen, die eine Schlagkraft von 3—15G gewährleisten, durchführt.

6. Verfahren nach Anspruch 1, 2, 3, 4 oder 5, dadurch gekennzeichnet, daß man als anorganisches Pulvermaterial eine Verbindung, ausgewählt aus der Gruppe Metalloxide und Metalldoppeloxide, einschließlich γ-Aluminiumoxid, α-Aluminiumoxid, Siliziumdioxid, Eisenoxid, Chromoxid, Titanoxid, Zirkonoxid, Ceroxid, Zinnoxid, Siliziumcarbid, Spinell, Zinkaluminat und Aluminosilikat, verwendet.

7. Verfahren nach Anspruch 1, 2, 3, 4, 5 oder 6, dadurch gekennzeichnet, daß man als Dispergiermittel mit einer oleophilen Gruppe mindestens eine Substanz aus der Gruppe: höhere Fettsäure mit 10—18

11

Kohlenstoffatomen, Ammonium-, Natrium-, Kalium-, Magnesium-, Calcium- und Aluminium- salze dieser höheren Fettsäuren, Ammonium-, Natrium-, Kalium-, Magnesium-, Calcium- und Aluminiumsalze von Schwefelsäureestern höherer Alkohole mit 10—18 Kohlenstoffatomen, Ammonium-, Natrium-, Kalium-, Magnesium-, Calcium- und Aluminiumsalze von Alkylarylsulfonsäureestern mit 10—18 Kohlenstoffatomen im Alkylteil und 6 oder 10 Kohlenstoffatomen im Arylteil, Ammonium-, Natrium-, Kalium-, Magnesium-, Calcium- und Aluminiumsalze von Dialkylsulfonbernsteinsäuren mit 4 bis 12 Kohlenstoffatomen im Alkylteil, Ammonium-, Natrium-, Kalium-, Magnesium-, Calcium- und Aluminiumsalze von Polyoxyethylenalkylethersulfaten mit 10—18 Kohlenstoffatomen im Alkylteil und 7—13 Ethylenoxideinheiten im Polyoxyethylenteil, Polyoxyethylen-höhere Alkohol-Ether mit 7—13 Ethylenoxideinheiten im Polyoxyethylenteil und 10—18 Kohlenstoffatomen im Alkoholteil, Polyoxyethylenalkylphenolether mit 7—13 Ethylenoxideinheiten im Polyoxyethylenteil und 8—18 Kohlenstoffatomen im Alkylteil, Sorbitan-höhere Fettsäure-Ester mit 10—18 Kohlenstoffatomen im Fettsäureteil, Polyoxyethylen-Sorbitan-höhere Fettsäure-Ester mit 7—13 Ethylenoxideinheiten im Polyoxyethylenteil und 10—18 Kohlenstoffatomen im Fettsäureteil, Polyoxyethylenhöhere Fettsäure-Ester mit 7—13 Ethylenoxideinheiten im Polyoxyethylenteil und 10—18 Kohlenstoffatomen im Fettsäureteil, höhere Fettsäureester von Glycerin mit 10—18 Kohlenstoffatomen im Fettsäureteil, höhere Alkylaminessigsäuresalze mit 10—18 Kohlenstoffatomen im Alkylteil, quaternäre Ammoniumsalze mit Alkylgruppen mit 1—18 Kohlenstoffatom(en), Polyoxyethylenalkylamine mit 7—13 Ethylenoxideinheiten im Polyoxyethylenteil und 10—18 Kohlenstoffatomen im Alkylteil, Phosphorsäureester höherer Fettsäuren mit 10—18 Kohlenstoffatomen, organische Silanverbindungen und organische Titanverbindungen, einsetzt.

8. Schleifmittel mit einer oleophilen Oberfläche zur Verwendung in magnetischen Aufzeichnungsmaterialien, erhältlich durch Naßkontaktbehandlung eines anorganischen Pulvermaterials einer Mohs-Härte von 5 oder mehr und einer durchschnittlichen Teilchengröße von etwa 2 µm oder weniger mit einer wäßrigen Lösung oder einer organischen Lösungsmittellösung eines Dispergiermittels mit einer oleophilen Gruppe und Trocknen des behandelten Pulvermaterials.

9. Schleifmittel mit einer oleophilen Oberfläche zur Verwendung in einem magnetischen Aufzeichnungsmaterial, erhältlich durch Trockenkontakbehandlung eines anorganischen Pulvers einer Mohs-Härte von 5 oder mehr und einer mittleren Teilchengröße von etwa 2 µm oder weniger zusammen mit einem Dispergiermittel mit einer oleophilen Oberfläche unter Mahlbedingungen, die eine Schlagkraft von 1G oder mehr gewährleisten.

10. Magnetisches Aufzeichnungsmaterial aus einem Schichtträger und einer darauf aufgetragenen magnetischen Aufzeichnungsschicht, dadurch gekennzeichnet, daß in der magnetischen Aufzeichnungsschicht pro 100 Gew.-Teile eines magnetischen Pulvermaterials 0,1—15 Gew.-Teil(e) eines durch Naßkontaktbehandlung eines anorganischen Pulvermaterials einer Mohs-Härte von 5 oder darüber und einer durchschnittlichen Teilchengröße von etwa 2 µm oder darunter mit einer wäßrigen Lösung oder einer organischen Lösungsmittellösung eines Dispergiermittels mit einer oleophilen Gruppe und Trocknen des behandelten Pulvermaterials erhältlichen Schleifmittels mit einer oleophilen Oberfläche enthalten ist (sind).

11. Magnetisches Aufzeichnungsmaterial aus einem Schichtträger und einer darauf aufgetragenen magnetischen Aufzeichnungsschicht, dadurch gekennzeichnet, daß in der magnetischen Aufzeichnungsschicht pro 100 Gew.-Teile eines magnetischen Pulvermaterials 0,1—15 Gew.-Teil(e) eines durch Trockenkontaktbehandlung eines anorganischen Pulvermaterials einer Mohs-Härte von 5 oder darüber und einer durchschnittlichen Teilchengröße von 2 µm oder darunter zusammen mit einem Dispergiermittel mit einer oleophilen Gruppe unter Mahlbedingungen, die eine Schlagkraft von 1G oder mehr gewährleisten, erhältlichen Schleifmittels mit einer oleophilen Oberfläche enthalten ist (sind).

## Revendications

1. Procédé pour la fabrication d'un abrasif ayant des surfaces oleophiles, utilisable dans des supports d'enregistrement magnétique, consistant à soumettre une matière inorganique en poudre, ayant une grosseur moyenne de particules de 2 µm ou au-dessous et une dureté sur l'echelle de Mohs de 5 ou au-dessus, soit (I) à un traitement de contact à l'état humide, soit (II) à un traitement de contact à sec dans des conditions de broyage donnant une valeur de percussion de 1G ou plus, par un agent dispersant qui comporte un groupe oléophile.

2. Procédé selon la revendication 1, dans lequel l'agent dispersant qui comporte un groupe oléophile est utilisé dans une proportion de 0,01 à 20 parties en poids pour 100 parties en poids de la matière inorganique en poudre.

3. Procédé selon la revendication 1, dans lequel l'agent dispersant qui comporte un groupe oléophile est utilisé dans une proportion de 0,02 à 10 parties en poids pour 100 parties en poids de la matière inorganique en poudre.

4. Procédé selon l'une quelconque des revendications 1 à 3, dans lequel le traitement de contact à l'état humide est conduit par agitation de la matière inorganique en poudre dans une solution aqueuse ou une solution dans un solvant organique d'un agent dispersant qui comporte un groupe oléophile, suivie d'un séchage.

# 0 108 971

5. Procédé selon l'une quelconque des revendications 1 à 3, dans lequel le traitement de contact à sec est conduit dans des conditions de broyage donnant une valeur de percussion de 3 à 15G.

6. Procédé selon l'une quelconque des revendications 1 à 5, dans lequel la matière inorganique en poudre est un composé choisi dans le groupe constitué par des oxydes métalliques et des oxydes métalliques doubles comprenant l'alumine γ, l'alumine α, la silice, l'oxyde de fer, l'oxyde de titane, l'oxyde de zirconium, l'oxyde de cérium, l'oxyde d'étain, le carbure de silicium, le spinelle, l'aluminate de zinc et l'aluminosilicate.

7. Procédé selon l'une quelconque des revendications 1 à 6, dans lequel l'agent dispersant qui comporte un groupe oléophile est au moins un membre choisi dans le groupe constitué par des acides gras supérieurs à 10—18 atomes de carbone; des sels ammoniques, sodiques, potassiques, magnésiens, calciques et aluminiques de ces acides gras supérieurs; des sels ammoniques, sodiques, potassiques, magnésiens, calciques et aluminiques d'esters de l'acide sulfurique et d'alcools supérieurs à 10—18 atomes de carbone; des sels ammoniques, sodiques, potassiques, magnésiens, calciques et aluminiques d'esters d'acides alkylarylsulfoniques, le groupement alkyle contenant 10 à 18 atomes de carbone et le groupement aryle contenant 6 ou 10 atomes de carbone; des sels ammoniques, sodiques, potassiques, magnésiens, calciques et aluminiques d'acides dialkylsulfosucciniques, le groupement alkyle contenant 4 à 12 atomes de carbone; des sels ammoniques, sodiques, potassiques, magnésiens, calciques et aluminiques de polyoxyéthylène alkyl éther sulfates, le groupement alkyle contenant 10 à 18 atomes de carbone et le groupement polyoxyethylène contenant 7 à 13 unités oxyde d'éthylène, des éthers d'alcools supérieurs et de polyoxyéthylène, le polyoxyéthylène contenant 7 à 13 unités oxyde d'éthylène et l'alcool supérieur contenant 10 à 18 atomes de carbone; des éthers d'alkylphénols et de polyoxyéthylène, le polyoxyéthylène contenant 7 à 13 unités oxyde d'éthylène et le groupe alkyle contenant 8 à 18 atomes de carbone; des esters de sorbitanne et d'acides gras supérieurs, l'acide gras supérieur contenant 10 à 18 atomes de carbone; des esters de polyoxyéthylène-sorbitanne et d'acides gras supérieurs, le polyoxyéthylène contenant 7 à 13 unités oxyde d'éthylène et l'acide gras supérieur contenant 10 à 18 atomes de carbone; des esters de polyoxyéthylène et d'acides gras supérieurs, le polyoxyéthylène contenant 7 à 13 unités oxyde d'éthylène et l'acide gras supérieur contenant 10 à 18 atomes de carbone; des esters de glycérol et d'acides gras supérieurs, les acides gras supérieurs contenant 10 à 18 atomes de carbone; des sels d'alkylamines supérieures et d'acide acétique, le groupe alkyle contenant 10 à 18 atomes de carbone; des sels d'ammonium quaternaire comportant des groupements alkyle à 1—18 atomes de carbone; des polyoxyéthylène-alkylamines, le polyoxyéthylène contenant 7 à 13 unités oxyde d'éthylène et le groupement alkyle contenant 10 à 18 atomes de carbone; des esters d'acide phosphorique et d'acides gras supérieurs contenant 10 à 18 atomes de carbone; des composés organiques de silanes; et des composés organotitaniques.

8. Abrasif ayant une surface oléophile, utilisable dans des supports d'enregistrement magnétique, pouvant être obtenu en soumettant une matière inorganique en poudre, ayant une dureté sur l'échelle de Mohs de 5 ou au-dessus et une grosseur moyenne de particules de 2 µm ou au-dessous, à un traitement de contact à l'état humide par une solution aqueuse ou une solution dans un solvant organique d'un agent dispersant qui comporte un groupe oléophile, et en séchant la matière en poudre traitée.

9. Abrasif utilisé dans un support d'enregistrement magnétique ayant une surface oléophile, pouvant être obtenu en soumettant une poudre inorganique ayant une dureté sur l'échelle de Mohs de 5 ou au-dessus et une grosseur moyenne de particules de 2 µm ou au-dessous, à un traitement de contact à sec par un agent dispersant qui comporte un groupe oléophile, dans des conditions de broyage donnant une valeur de percussion de 1G ou plus.

10. Support d'enregistrement magnétique comprenant un substrat et une couche d'enregistrement magnétique appliquée sur celui-ci, caractérisé en ce que la couche d'enregistrement magnétique comprend, pour 100 parties en poids d'une matière en poudre magnétique, 0,1 à 15 parties en poids d'un abrasif ayant une surface oléophile, pouvant être obtenu en soumettant une matière inorganique en poudre, ayant une dureté sur l'échelle de Mohs de 5 ou au-dessus et une grosseur moyenne de particules de 2 µm ou au-dessous, à un traitement de contact à l'état humide par une solution aqueuse ou une solution dans un solvant organique d'un agent dispersant qui comporte un groupe oléophile, et en séchant la matière en poudre traitée.

11. Support d'enregistrement magnétique comprenant un substrat et une couche d'enregistrement magnétique appliquée sur celui-ci, caractérisé en ce que la couche d'enregistrement magnétique comprend, pour 100 parties en poids d'une matière en poudre magnétique, 0,1 à 15 parties en poids d'un abrasif ayant une surface oléophile, pouvant être obtenu en soumettant une poudre inorganique ayant une dureté sur l'échelle de Mohs de 5 ou au-dessus et une grosseur moyenne de particules de 2 µm ou au'dessous, à un traitement de contact à sec par un agent dispersant qui comporte un groupe oléophile, dans des conditions de broyage donnant une valeur de percussion de 1G ou plus.